(19) Europäisches Patentamt
European Patent Office
Office européen des brevets

(11) **EP 3 823 158 A1**

(12) **EUROPEAN PATENT APPLICATION**
published in accordance with Art. 153(4) EPC

(43) Date of publication:
**19.05.2021 Bulletin 2021/20**

(21) Application number: **19834005.1**

(22) Date of filing: **01.07.2019**

(51) Int Cl.:
*H02P 9/04* (2006.01)          *H02M 7/12* (2006.01)
*H02M 7/493* (2007.01)        *H02M 7/497* (2007.01)
*H02P 9/00* (2006.01)

(86) International application number:
**PCT/JP2019/026187**

(87) International publication number:
**WO 2020/013015 (16.01.2020 Gazette 2020/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
**KH MA MD TN**

(30) Priority: **09.07.2018 JP 2018130241**

(71) Applicants:
• **Hitachi Mitsubishi Hydro Corporation**
  **Tokyo 108-0014 (JP)**
• **Hitachi, Ltd.**
  **Tokyo 100-8280 (JP)**

(72) Inventors:
• **BANDO, Akira**
  **Tokyo 108-0014 (JP)**
• **OYAKE, Takashi**
  **Tokyo 108-0014 (JP)**
• **ICHINOSE, Masaya**
  **Tokyo 100-8280 (JP)**

(74) Representative: **Zech, Stefan Markus**
**Meissner Bolte Patentanwälte**
**Rechtsanwälte Partnerschaft mbB**
**Postfach 86 06 24**
**81633 München (DE)**

(54) **VARIABLE-SPEED GENERATOR-MOTOR DEVICE**

(57)     In a variable speed generator/motor device including a variable frequency power converter, a direct current voltage device including a voltage type self-excited converter, an automatic voltage adjuster, and a converter current adjuster that controls unit converters, a first three-phase branch circuit is provided between the direct current voltage device and an alternating current system; a second three-phase branch circuit is provided between the variable frequency power converter and a three-phase squirrel-cage induction machine; a first load switch is provided between the first three-phase branch circuit and the second three-phase branch circuit; a measurement current transformer is provided between the three-phase squirrel-cage induction machine and the second three-phase branch circuit; when switching from a converter mode in which the variable frequency power converter drives the three-phase squirrel-cage induction machine to generate power to a bypass mode, the first load switch is closed to stop a gate command to the unit converters; and when switching from the bypass mode to the converter mode, a current command value of the converter current adjuster is calculated from a current value of the measurement current transformer, the gate command to the unit converters is started, and the first load switch is opened.

FIG.1

FIG.1

**Description**

Field

The present invention relates to a variable speed generator/motor device obtained by connecting a pulse-width modulated (PWM) power converter to an alternating-current rotary electric machine.

Background

In a variable speed generator/motor device in which a frequency converter connected back-to-back to a direct-current end of a voltage type self-excited converter (hereinafter, called "VSC converter" in the present invention) that converts power between an alternating current and a direct current by applying pulse-width modulation to a power semiconductor switching element (hereinafter, called "switching element" in the present invention) having a self-turn-off function is connected between an alternating current system and an alternating-current rotary electric machine (hereinafter, called "FPC system" in the present invention), the frequency converter has been improved in price-to-performance ratio. As a result, application of the variable speed generator/motor device to renewable energy generation systems such as wind power systems is expanding.

As a result of development of a modular multilevel PWM converter (hereinafter, called "MMC converter" in the present invention) that is one of the VSC converters, a high-capacity, high-voltage generator/motor can be directly connected to the frequency converter without interposing a transformer therebetween, so that the application of the FPC system is expected to expand.

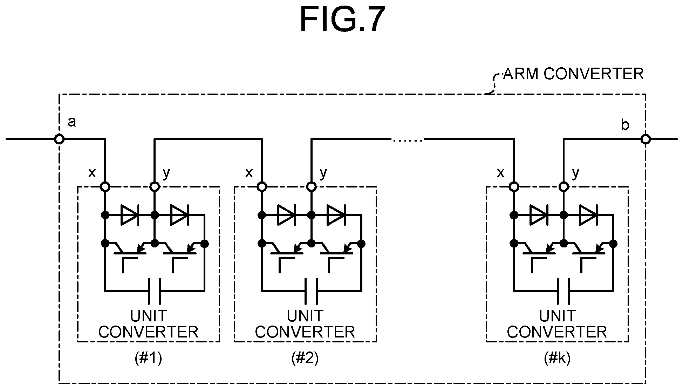

FIG. 7 illustrates a circuit of an arm converter included in the MMC converter. The arm converter is constituted by a two-terminal converter obtained by connecting k unit converters in series. Each of the unit converters controls a modulation factor of a PWM converter having a capacitor as a voltage source to generate a desired voltage. The voltage of the capacitor varies with charge and discharge at a period determined by an alternating current frequency.

Patent Literature 1 discloses a system in which two sets of three-phase half-wave circuits each obtained by star connection of three arm converters are provided, the star connection is used as two direct current terminals, and a circulating current reducing reactor is provided between the other terminal of an arm of each of the phases and an alternating current terminal (hereinafter, called "DSMMC converter" in the present invention).

Non Patent Literature 1 discloses a method of providing a variable frequency power supply by back-to-back connection of direct current terminals of two DSMMC converters, and providing a variable speed motor device by connecting one alternating current terminal to an alternating current system and connecting the other alternating current terminal to an alternating-current rotary electric machine. Patent Literature 2 discloses a method of canceling a direct current magnetomotive force of a transformer core caused by a circulating current by providing two sets of three-phase half-wave circuits each obtained by star connection of three arm converters, using the star connection as two direct current terminals, connecting the other terminal of an arm of each of the phases to a transformer provided with secondary and tertiary windings connected into a double star connection, and using leakage reactance of the secondary and tertiary windings as a current reduction element (hereinafter, called "DIMMC converter" in the present invention).

Patent Literature 3 discloses a method of canceling out the direct current magnetomotive force of the transformer core caused by the circulating current by providing a three-phase half-wave circuit obtained by star connection of three arm converters, using the star connection portion as a first terminal of a direct current, providing a transformer provided with secondary and tertiary windings and using a zigzag star connection portion as a second terminal of the direct current, and using leakage reactance of the secondary and tertiary windings connected in a zigzag form as a current reduction circuit element (hereinafter, called "ZCMMC converter" in the present invention).

Patent Literature 4 discloses an FPC system using the above-described three types of the MMC converters in configurations illustrated in FIGS. 8A, 8B, and 8C. Patent Literature 4 discloses that in the case of the DIMMC converter, the DIMMC converter needs to have two sets of three-phase alternating current windings each having a 60-degree phase band, and that in the case of the ZCMMC converter, the ZCMMC converter needs to have three-phase alternating current windings having a 120-degree phase band. Patent Literature 4 also discloses a method of starting a synchronous generator/motor taking into account a "reduction in output in a low-frequency region", which is a disadvantage of the MMC converter.

Citation List

Patent Literature

Patent Literature 1: Japanese Patent No. 5189105

Patent Literature 2: International Publication No. 2009/135523

Patent Literature 3: Japanese Patent No. 5268739

Patent Literature 4: Japanese Patent No. 6243083

Patent Literature 5: Japanese Patent Application Laid-open No. 2003-88190

Patent Literature 6: Japanese Patent No. 6246753

Patent Literature 7: Japanese Patent No. 5537095

Patent Literature 8: Japanese Patent No. 5045053

Patent Literature 9: Japanese Patent Application Laid-open No. S57-88881

Patent Literature 10: Japanese Patent Application Laid-open No. S62-247776

Non Patent Literature 1: Makoto HAGIWARA, Kazutoshi NISHIMURA, Yasufumi AKAGI, "High Voltage Motor Drive Using Modular Multilevel PWM Inverter: First Report - Experimental Verification Using 400 V, 15 kW Mini Model", The transactions of the Institute of Electrical Engineers of Japan D, April 2010, Volume 130, No. 4, pp. 544-551

Non Patent Literature 2: Isamu HASEGAWA, Shizunori HAMADA, Kenji KOBORI, Yutaka SHOJI, "Development of Transformerless Multilevel High Voltage Inverter", Meiden Jiho, 2016, No. 3, pp. 34-39

Non Patent Literature 3: "High Voltage Inverters Contributing to Power Leveling at Pumped Storage Power Plants", Yaskawa News, No. 289, pp. 9

Non Patent Literature 4: Power Electronics Education Working Group, Engineer Education Committee, The Institute of Electrical Engineers of Japan, "Motor Drive Basics - Part 2", 3rd Power Electronics Seminar, March 2014, pp. 46-47

Summary

Technical Problem

As a method for obtaining the variable speed generator/motor device, a secondary excitation system (hereinafter, called "DFS system" in the present invention) has been developed earlier in which a branch point is provided between the alternating current system and an armature winding of a wound-rotor induction machine, and the frequency converter is connected between the branch point and an excitation winding of the wound-rotor induction machine. In the case of the DFS system, a capacity of the frequency converter is determined by a variable speed range centered on a synchronous speed. Therefore, the DFS system has an advantage of being smaller than a generator/motor.

Examples of the power conversion device include, in addition to the VSC converter, a separately excited current type converter (hereinafter, called "LCC converter" in the present invention) that uses a switching element, such as a thyristor, having no self-turn-off function. The LCC converter has a disadvantage of consuming reactive power, but has an advantage of being capable of economically continuing to operate when a system accident has spread, because the switching element has a higher short term overcurrent withstand capability than that of a self-turn-off element that is limited by an instantaneous value of an interrupting current.

In the case of the DFS system, the capacity of the generator/motor is increased to compensate the reactive power consumed by the LCC converter. However, an opinion is strongly argued that this increase in capacity is within an allowable range if the variable speed range is equal to or narrower than ±10%.

For example, if the variable speed range is ±8%, the capacity of the LCC converter is 15% of the capacity of the generator. Moreover, the capacity of the generator/motor is higher by 5% than in the case where the VSC converter is applied.

A reduction in efficiency of the generator/motor device caused by a total loss generated by the LCC converter and the excitation transformer can be reduced to 0.2% or below. A loss generated by the LCC converter can be reduced to 0.1% or below, which is a conventional stray load loss.

In the case of the FPC system, if the efficiency of the VSC converter including a harmonic filter device is 98%, the combined efficiency of the VSC converter and the generator/motor is reduced by 2% because the capacity of the VSC converter is equal to the capacity of the generator/motor. This reduction in efficiency is 10 times that of the DFS system. If a step-up transformer is connected between the generator/motor and the VSC converter, the efficiency reduction further increases.

If the FPC system is applied to a hydroelectric power generation field, in many cases, an annual amount of electrical energy lost by loss of the maximum turbine efficiency at a rated output caused by a frequency converter loss cancels out most of an increase in the turbine efficiency resulting from a reduction in speed of the frequency converter.

Patent Literature 5 discloses a system of providing a bypass switch in the frequency converter, and having a mode of operating at an optimal speed of an engine via the frequency converter (hereinafter, called "converter operation" in the present invention), and an operation mode of bypassing the frequency converter and directly connecting to the alternating current system to minimize the loss of electrical equipment (hereinafter, called "bypass operation" in the present invention).

Patent Literature 6 discloses that a frequency converter having the same configuration as that of Patent Literature 5 and including a bypass switch using "two breakers" or "one breaker and one semiconductor switch" is applied to a hydroelectric power generation system, and discloses a variable speed operation control device that provides a period in which no current of a generator flows during switching, performs a bypass operation during a normal condition, performs a converter operation in cases of below the minimum flow rate, the minimum head, and the minimum output, and reduces the rotational speed in the converter operation to contribute to improvement in power generation efficiency. Patent Literature 6 claims that this configuration can "provide a variable speed generator/motor device using a frequency converter having a lower capacity than that of a generator".

Patent Literature 9 and Patent Literature 10 disclose a method of providing a commutation period during switching between the bypass operation and the converter operation and ensuring continuity of a current of a synchronous machine having an excitation winding.

Patent Literature 10 discloses a method in which methods of Patent Literature 8 and Patent Literature 9 are used, and in order to join the synchronous motor in parallel to the system in a shockless manner while driving the synchronous motor using the VSC converter, the current of the VSC converter is controlled so as to make a phase difference obtained by coordinate transformation of a system voltage and a motor voltage to be zero.

Non Patent Literature 3 discloses a method in which methods of Patent Literature 8 and Patent Literature 9 are used, and switching is made from a high-voltage inverter for starting pumped storage power generation to a commercial power supply in a shockless manner. However, Non Patent Literature 3 discloses neither time nor method of switching from an excitation control method during driving of the high-voltage inverter (excitation current control generally called AER) to an excitation control method during operation using the commercial power (automatic voltage control generally called AVR). Although Non Patent Literature 3 discloses a method of stopping the high-voltage inverter after opening a breaker on the inverter side, this method does not allow the shockless switching in the DSMMC system that needs to independently control an alternating current and a direct current. In the above-described method, capacitor voltages of unit converters are uneven when the inverter has stopped. Therefore, in the case of the DSMMC system, returning cannot be made from the commercial power to the high-voltage inverter.

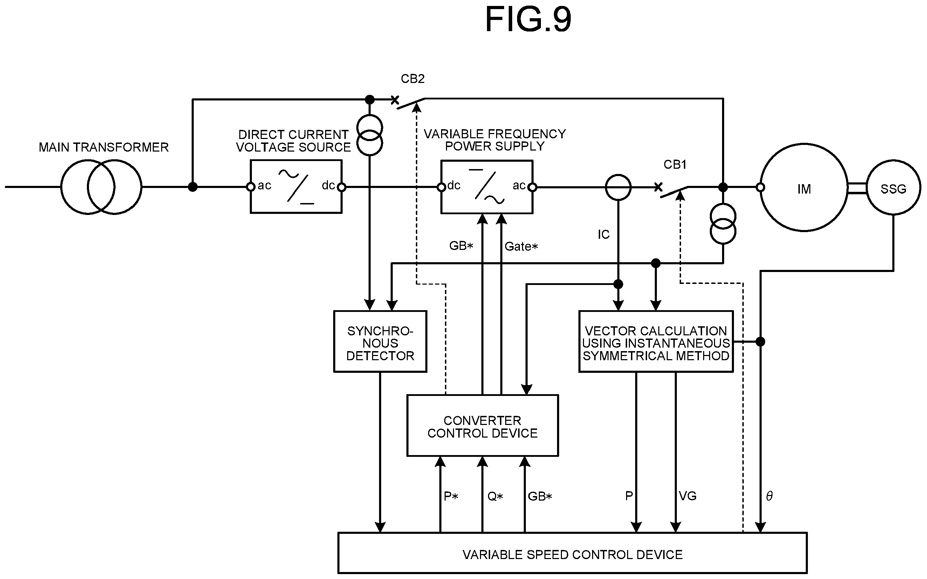

The following describes a case illustrated in FIG. 9 where a frequency converter is applied to a squirrel-cage induction machine that uses a conventional technology. However, Patent Literature 5 described above and Patent Literature 6 described above do not mention the type of the generator/motor (an induction machine, a permanent magnet synchronous machine, or a synchronous machine having an excitation winding). Accordingly, the following assumes a case where a frequency converter is added to a power generation system using an existing squirrel-cage induction machine to make the speed thereof variable, and assumes that synchronous detectors are provided at both ends of a breaker.

A variable frequency power supply is provided with a breaker CB1, and a bypass circuit is provided with a breaker CB2. The breakers are opened and closed to bidirectionally switch between the bypass operation and the converter operation.

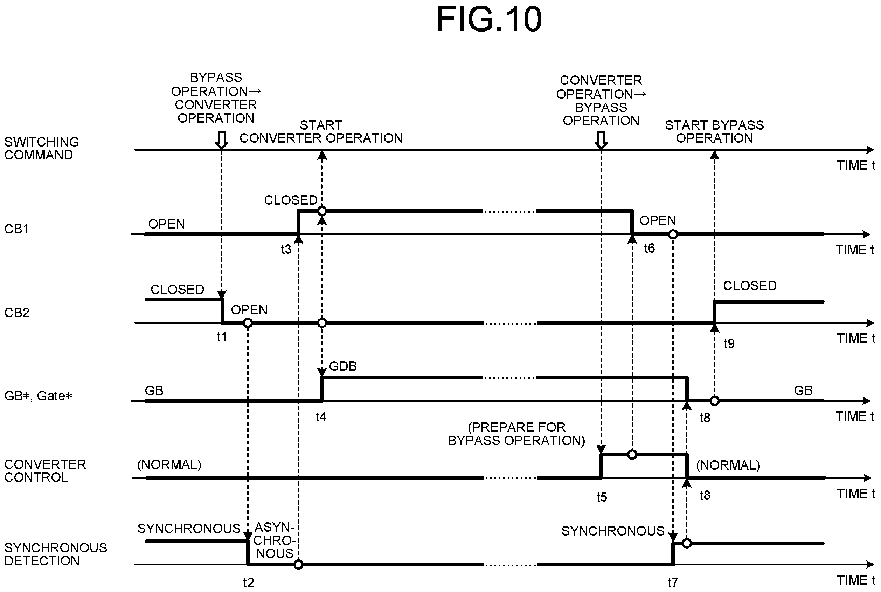

FIG. 10 illustrates an operation sequence during the switching.

In response to a switching command from the bypass operation to the converter operation, the breaker CB2 is closed at time t1 to establish an asynchronous state at time t2; the breaker CB1 is closed at time t3; and a GDB state is established at time t4 to start the converter operation. The period from time t1 to time t4 serves as a no-current period.

In response to a switching command from the converter operation to the bypass operation, the converter control is switched from normal operation control to a bypass preparation mode at time t5, and the speed is settled to a speed obtained by taking into account a deceleration during switching (equal to or higher than the synchronous speed) during a motor operation and settled to a speed obtained by taking into account an acceleration (equal to or lower than the synchronous speed) during a generator operation. When the rotational speed has reached a settled value, the breaker CB1 is closed at time t6. After the synchronization is detected at time t7 at which the speed reaches the synchronous speed without being restrained, the converter operation stops at time t8, and the bypass operation starts at time t9.

Patent Literature 5 and Patent Literature 6 described above do not disclose a problem that inevitably occurs in the above-described operation sequence due to the switching between the bypass operation and the converter operation and a solution to the problem.

A first problem is that, if the no-current period of the generator/motor occurring during the switching period is long, the engine is accelerated in an unrestrained state during the generator operation, or is decelerated during the motor operation. As a result, an out-of-phase input is applied to the alternating current system or the frequency converter when the current flow resumes.

If, instead, the no-current period of the generator/motor is short, a sudden short-circuit occurs when the input is resumed immediately after a rapid change in voltage amplitude when a load is shut off. In either case, a problem occurs that system fluctuation due to an overcurrent or machine impact due to transient torque occurs. As suggested by Patent Literature 6, this problem can be regarded as "having only a minor influence" during the switching under a small load, but cannot be ignored as the load increases.

A second problem is the following. In the case of general hydroelectric power generation equipment for use in the wind power generation or supply demand adjustment, the operation is inevitably frequently switched between the bypass operation and the converter operation. A problem occurs that the breaker replacement cycle decreases if the breaker is applied to the bypass switch.

It is an object of the present invention to solve the problems described above, and provide a variable speed generator/motor device that uses a squirrel-cage induction machine.

Solution to Problem

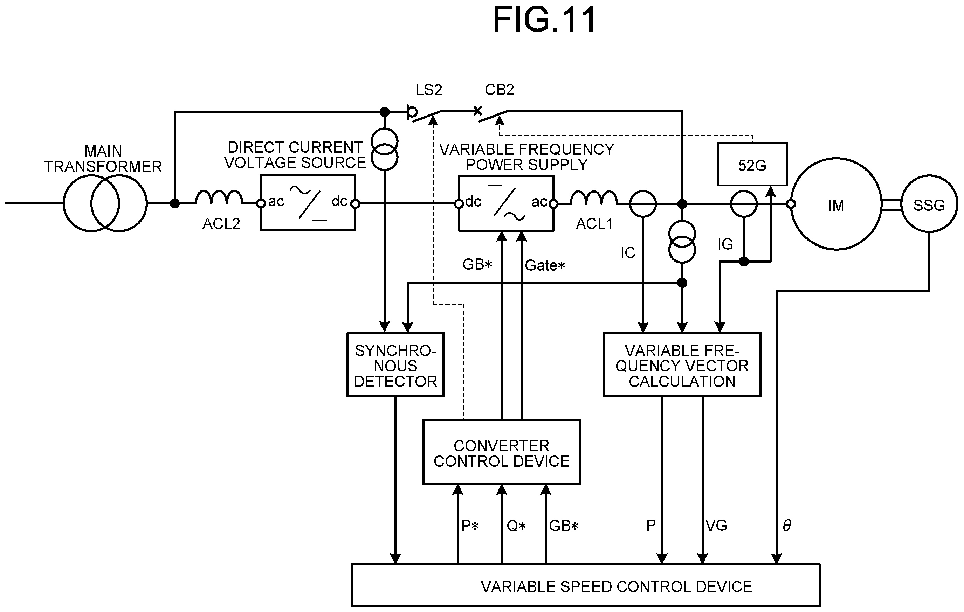

FIG. 11 illustrates a circuit configuration illustrating means for solving the problems.

First means is the method disclosed in Patent Literature 9 and Patent Literature 10, and can reduce a commutation current by providing a current-limiting element ACL1 at an alternating current terminal of a variable speed frequency power supply and a current-limiting element ACL2 at an alternating current terminal of a direct current voltage source.

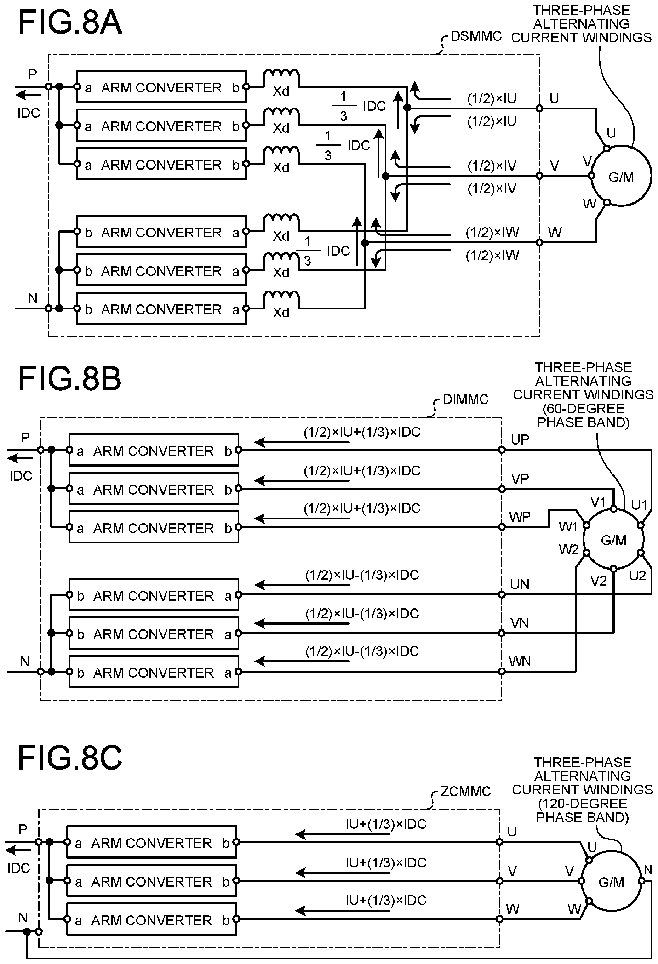

Of the MMC converters illustrated in FIGS. 8A, 8B, and 8C, the DIMMC converter and the ZCMMC converter do not include a current-limiting element corresponding to the current-limiting element ACL2. These two types of the MMC converters each essentially conduct a direct current portion IDC from the alternating current terminal, and therefore, cannot be applied to the bypass operation. In the case of the DSMMC converter, a built-in circulating current reducing reactor Xd serves as a current-limiting element equivalent to (ACL2/2). Therefore, no additional device is required.

Because of the above, the DSMMC converter among the MMC converters is applicable as the direct current voltage source of the present invention.

If a two-level converter, a three-level converter, or a five-level converter is applied as the variable speed frequency power supply, a current-limiting reactor or a step-up transformer needs to be added as the current-limiting element ACL1 to the alternating current terminal side. The DIMMC converter and the ZCMMC converter cannot be applied for the same reason as in the case of the direct current voltage source. In the case of the DSMMC converter, the built-in circulating current reducing reactor Xd serves as a current-limiting element equivalent to (ACL1/2). Therefore, no additional device is required.

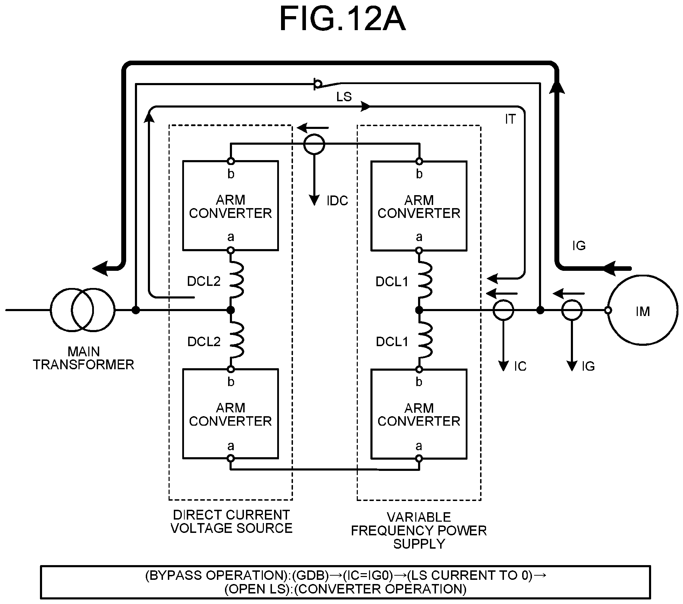

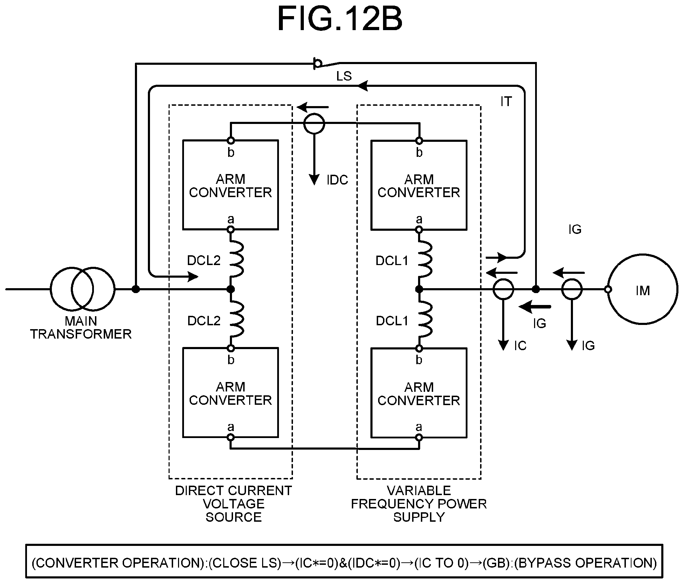

FIGS. 12A and 12B each illustrate a commutation mode during the operation switching achieved by the above-described configuration.

In the switching from the bypass operation to the converter operation, the variable frequency power supply starts operating (GDB) to start the commutation period; a generator current IG during the switching is held at a current command IG0 to bring a commutation current IT closer to IG; the current of a load switch LS is reduced to approximately zero; and then the load switch LS is opened to start the converter operation. Thus, the breaker need not be used for opening and closing the bypass circuit.

In the switching from the converter operation to the bypass operation, the load switch LS is closed to secure a current conducting path of the commutation current IT; a converter current command IC* is changed to zero to reduce the current so as to stop the converter (GB); and the bypass operation starts. Thus, the current of the squirrel-cage induction machine can be kept constant during the commutation period. A circulating current reducing reactor DCL2 built into the direct current voltage source serves as a current-limiting element equivalent to (ACL2/2). Therefore, ACL2 need not be added. ACL1 also need not be added for the same reason. In the case of the DSMMC converter, IDC and IC are independently controlled. Therefore, the converter needs to be stopped (GB) after reducing the current by simultaneously changing IC* and IDC* to zero.

The desired object can be achieved by the device configuration and the operation sequence described above.

Advantageous Effects of Invention

According to the present invention, a frequency converter and a control switching device using a bypass switching switch and a DSMMC converter are added to a power generation device or a generator/motor device that uses a squirrel-cage induction machine installed on the assumption of a constant-frequency operation using an alternating current system, and maximization is achieved both in efficiency of the electrical equipment in the bypass operation in a high load region and in efficiency of the machine in a low load region. A commutation period is provided during the switching between both operation modes. As a result, the continuity of the current of the generator/motor is ensured to increase the availability thereof, and a load associated with the switching affecting the life of the equipment can be reduced to achieve a long life and high reliability.

Brief Description of Drawings

FIG. 1 is a circuit diagram illustrating an embodiment of the present invention.
FIG. 2A is a circuit diagram of an arm converter illustrating the embodiment of the present invention.
FIG. 2B is a circuit diagram of another arm converter illustrating the embodiment of the present invention.
FIG. 3 is a circuit diagram of a unit converter illustrating the embodiment of the present invention.
FIG. 4 is a block diagram of a converter control device illustrating the embodiment of the present invention.
FIG. 5 is a block diagram of a variable speed control device illustrating the embodiment of the present invention.
FIG. 6 is an operation sequence illustrating the embodiment of the present invention.
FIG. 7 is a circuit diagram of an arm converter included in an MMC converter.
FIG. 8A is a circuit diagram of a variable speed generator/motor device obtained by connecting an MMC converter to a generator/motor.
FIG. 8B is a circuit diagram of another variable speed generator/motor device obtained by connecting an MMC converter to a generator/motor.
FIG. 8C is a circuit diagram of still another variable speed generator/motor device obtained by connecting an MMC converter to a generator/motor.
FIG. 9 is a circuit diagram of a variable speed generator/motor device using a conventional technology.
FIG. 10 is an operation sequence of the variable speed generator/motor device using the conventional technology.
FIG. 11 is a circuit diagram illustrating means for achieving the object of the present invention.
FIG. 12A is a circuit diagram illustrating a commutation state of a variable speed generator/motor device using the present invention.
FIG. 12B is a circuit diagram illustrating another commutation state of the variable speed generator/motor device using the present invention.

Description of Embodiment

The following describes an example of a variable speed generator/motor device according to the present invention in detail using the drawings. The present invention is not limited by this example.

(Embodiment)

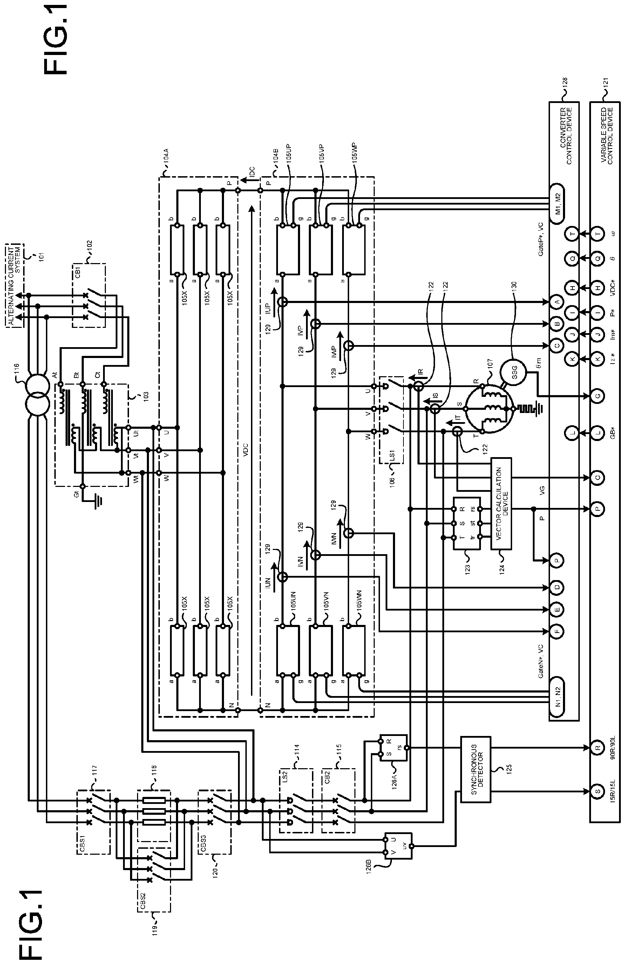

FIG. 1 is a circuit diagram illustrating an embodiment of the present invention.

An alternating current system 101 is connected to three-phase terminals (At, Bt, and Ct) of a main transformer 103 through a system breaker 102, and other three-phase terminals (Ut, Vt, and Wt) are connected to three-phase terminals (U, V, and W) of a direct current power supply device 104A. A first terminal (P) and a second terminal (N) of the direct current power supply device 104A are connected back-to-back to the first terminal (P) and the second terminal (N) of a direct current power supply device 104B.

The direct current power supply device 104B is provided with six arm converters (105UP, 105VP, 105WP, 105UN, 105VN, and 105WN) each including two terminals (a and b). The terminals b of three of the arm converters (105UP, 105VP, and 105WP) are connected in a star configuration to the first terminal (P) of the direct current power supply device 104B. The terminals a of the remaining three of the arm converters (105UN, 105VN, and 105WN) are connected in a star configuration to the second terminal (N) of the direct current power supply device 104B. The terminal a of the arm converter (105UP) is connected to the terminal b of the arm converter (105UN), and from a connection line therebetween, a line branches and is connected to a terminal R of a squirrel-cage induction machine 107 through a load switch (LS1) 106. The terminal a of the arm converter (105VP) is connected to the terminal b of the arm converter (105VN), and from a connection line therebetween, a line branches and is connected to a terminal S of the squirrel-cage induction machine 107 through the load switch (LS1) 106. The terminal a of the arm converter (105WP) is connected to the terminal b of the arm converter (105WN), and from a connection line therebetween, a line branches and is connected to a terminal T of the squirrel-cage induction machine 107 through the load switch (LS1) 106.

The direct current power supply device 104A connects six arm converters 105X each including the two terminals (a and b) in a Graetz configuration.

Connection lines between three-phase terminals (R, S, and T) of the squirrel-cage induction machine 107 and the load switch (LS1) are provided with branch points, and the branch points are connected to the three-phase terminals (Ut, Vt, and Wt) of the main transformer 103 through a bypass switch load switch (LS2) 114 and an overcurrent protection breaker (CB2) 115. A measurement current transformer 122 is provided between the branch points and the three-phase terminals (R, S, and T) of the squirrel-cage induction machine 107. The overcurrent protection breaker (CB2) 115 is opened by an operation for protection from overcurrent of the squirrel-cage induction machine 107 detected by the measurement current transformer 122. The other switching is performed by the bypass switch load switch (LS2) 114.

The alternating current system 101 is connected to the three-phase terminals (U, V, and W) of the direct current power supply device 104A through an initial charge transformer 116, an initial charge breaker (CBS1) 117, a current-limiting resistor 118, and an initial charge breaker (CBS3) 120. The current-limiting resistor 118 is connected in parallel to an initial charge breaker (CBS2) 119.

Reference numeral 121 denotes a variable speed control device, which outputs an excitation current command Im* and a torque current command Iτ* of the squirrel-cage induction machine 107. As variable speed control methods of the squirrel-cage induction machine, various methods are developed, from vector control achieving high-speed accurate torque control to a simple V/f method (where V denotes a voltage and f denotes a frequency).

In the present invention, expressions and symbols conform to those disclosed in Non Patent Literature 4 mentioned above, and the embodiment is presented in a manner in which a control method is partially simplified.

Expression 1 is a basic expression for the squirrel-cage induction machine expressed in complex notation.

[Expression 1]

$$\begin{bmatrix} V1\_dq \\ 0 \end{bmatrix} = \begin{bmatrix} r1 + (p + j\omega)\cdot l1 & (p + j\omega)\cdot Lm \\ -r'2 & r'2 + [p + j(\omega - \omega m)\cdot Lm] \end{bmatrix} \begin{bmatrix} I1\_dq \\ Im \end{bmatrix}$$

(1)

A current value I1_dq is a value expressed in complex notation with a real part on a d-axis and an imaginary part on a q-axis, and is given as (I1_dq = I1_d + j × I1_q). The symbol p denotes a differential operator, and ω denotes an angular frequency with a coordinate transformation phase θ.

A relation between three-phase currents IR, IS, and IT of the squirrel-cage induction machine 107 and I1_d and I1_q can be represented by Expression 2, where the phase order is R-S-T.

[Expression 2]

$$\begin{bmatrix} I1\_d \\ I1\_q \end{bmatrix} = \sqrt{\frac{2}{3}} \begin{bmatrix} \cos(\theta) & \cos(\theta) & \cos(\theta) \\ -\sin(\theta) & -\sin(\theta) & -\sin(\theta) \end{bmatrix} \begin{bmatrix} IR \\ IS \\ IT \end{bmatrix}$$

(2)

In Expression 2, if the coordinate transformation phase θ synchronizes with a control voltage source V1_dq, I1_dq has a constant value (direct current amount) in a steady state.

In Non Patent Literature 4, the motor direction is assumed to be positive. Hereinafter, the generator direction is assumed to be positive, and variables are redefined.

First, the control method disclosed in Non Patent Literature 4 is simplified, and a current command value I1_dq* is given as (I1_dq* = Im* + j·Iτ*). The symbol Im* denotes the excitation current command, and Iτ* denotes the torque current command. A relation between a torque command τ* and the torque current command Iτ* is given as Iτ* = τ*/(Lm·Im*). A slip frequency ωs is set as ωs = (r'2/Lm)·(Iτ*/Im*).

In the variable speed control device 121, the measurement current transformer 122 and a measurement voltage transformer 123 for measuring line-to-line voltages among the three-phase terminals (R, S, and T) of the squirrel-cage induction machine 107 are connected to a vector calculation device 124. The vector calculation device 124 outputs a voltage VG and effective power P of the squirrel-cage induction machine 107 to the variable speed control device 121. The voltage and current of the squirrel-cage induction machine 107 have a variable frequency. Patent Literature 7 discloses a vector calculation method of the variable frequency.

Reference numeral 125 denotes a synchronous detector that receives voltages from a measurement voltage transformer 126B provided between terminals on the main transformer 103 side of the bypass switch load switch (LS2) 114 and from a measurement voltage transformer 126A provided between terminals on the squirrel-cage induction machine 107 side of the overcurrent protection breaker (CB2) 115, and outputs frequency increase and decrease commands 15R and 15L and voltage increase and decrease commands 90R and 90L to the variable speed control device 121.

Reference numeral 128 denotes a converter control device that receives three-phase alternating currents (IUN, IVN, IWN, IUP, IVP, and IWP) measured by a direct current transformer 129 for measuring output currents of the six arm converters, receives the coordinate transformation phase θ expressed in electrical angle from the variable speed control device 121, and receives the effective power measurement signal P from the vector calculation device 124, and performs control calculation, and outputs gate signals (GateP*) to the three arm converters (105UP, 105VP, and 105WP) and outputs gate signals (GateN*) to the remaining three arm converters (105UN, 105VN, and 105WN).

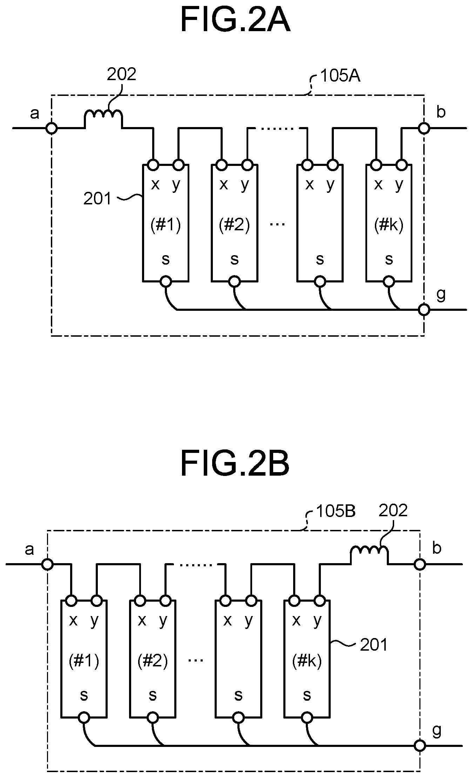

FIGS. 2A and 2B are circuit diagrams of the arm converters 105X, 105UP, 105VP, 105WP, 105UN, 105VN, and 105WN illustrated on FIG. 1. k (k is a natural number) unit converters 201 each including two terminals (x and y) are connected in series, and are further connected in series to a current-limiting reactor 202. The current-limiting reactor 202 may be provided to the terminal a of the arm converter as illustrated in 105A, or may be provided to the terminal b of the arm converter as illustrated in 105B, or any combination of either of these configurations may be employed.

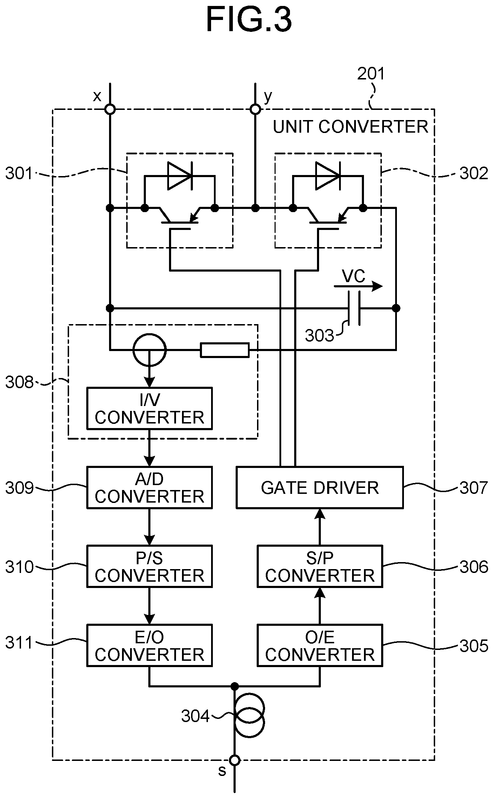

FIG. 3 is a circuit diagram of each of the unit converters 201 illustrated in FIGS. 2A and 2B. The unit converter 201 connects a switching element 301 and a switching element 302 constituting a bidirectional chopper circuit as an energy storage element having voltage source characteristics to a capacitor 303, and performs PWM control based on gate signals to the switching elements 301 and 302 that are supplied from an optical communication cable 304 connected to the converter control device 128 through an optical-to-electrical conversion element 305 and a serial-to-parallel conversion circuit 306 to a gate driver 307, and adjusts an average voltage between the two terminals (x and y) between zero and a capacitor voltage VC. The capacitor voltage VC returns an analog signal output of a direct current voltage transformer 308 through an analog-to-digital converter 309, a parallel-to-serial conversion circuit 310, an electrical-to-optical conversion element 311, and the optical communication cable 304 to the converter control device 128. With this configuration, the current flows in only either one of the switching elements 301 and 302, so that the loss can be minimized.

In the embodiment illustrated in FIGS. 1, 2A, 2B, and 3, a sequence at the start of operation will be described.

Before the start of the operation, the system breaker 102 is opened, the capacitor 303 of the direct current power supply device 104A is discharged, and the squirrel-cage induction machine 107 is in the stopped state.

First, the initial charge breaker (CBS3) 120 is closed. Subsequently, the initial charge breaker (CBS1) 117 is closed. The current is restrained by a resistance value of the current-limiting resistor 118, and the capacitor 303 of the direct current power supply device 104A starts to be charged through a diode included in the switching element 302. When the current of the initial charge breaker (CBS1) 117 that decreases with increase in the capacitor voltage VC has reached a desired value, the initial charge breaker (CBS2) 119 is closed to accelerate the charging. This operation increases the voltage VC of the capacitor 303 to a value equivalent to approximately 1/2k times a direct current voltage command VDC*. The symbol k denotes the number of series k of the unit converters 201. Subsequently, the gate commands GateP* and GateN* of the arm converters 105 are issued to start the operation, and the voltage of the capacitor 303 is increased to a desired value in a chopping mode of the switching elements 301 and 302. After the voltage is increased, the initial charge breaker (CBS3) 120 is opened to end the initial charge operation.

However, during the normal stop, the capacitor 303 of the direct current power supply device 104A is not discharged. Accordingly, when the capacitor 303 is exceptionally self-discharged immediately after being stopped for a long time, the above-described initial charge operation need not be performed except in the case of immediately after the discharge during maintenance.

Subsequently, the system breaker (CB1) 102 is closed to charge the main transformer, and the operation is placed in a standby state.

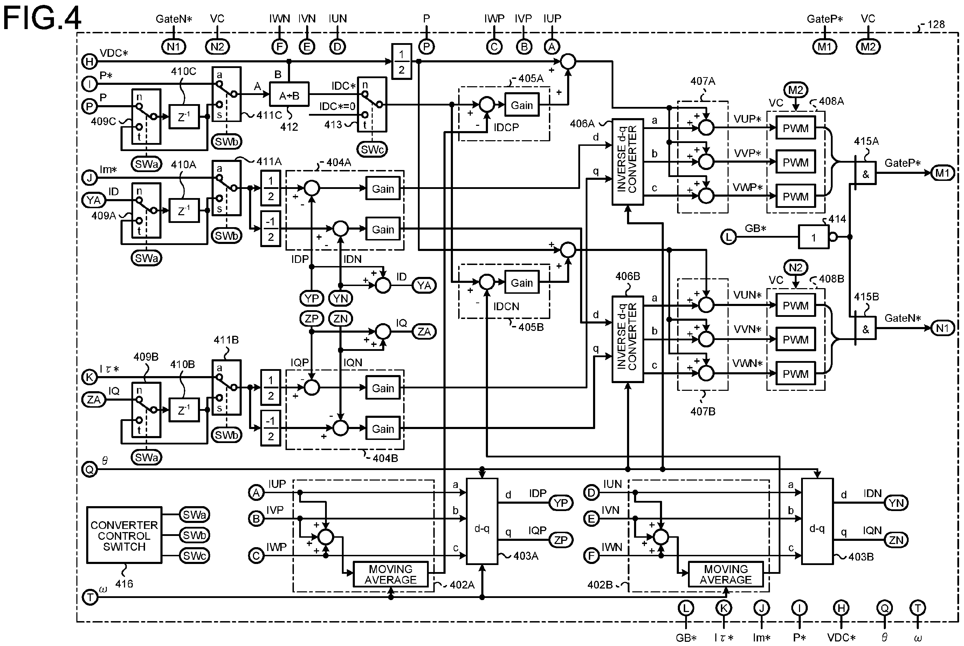

FIG. 4 is a control block diagram of the converter control device 128 illustrating the embodiment.

Reference numeral 402A denotes a moving average calculator that obtains a moving average number of times Np from the coordinate transformation angular frequency ω received from the variable speed control device 121. In addition, the moving average calculator 402A performs moving average calculation. When Δt denotes a sampling period, a relation ω = 2 × π/(Np × Δt) holds. The moving average calculator 402A obtains a moving average of the total of the three-phase alternating currents (IUP, IVP, and IWP) Np times to calculate a direct current IDCP. Reference numeral 402B denotes a moving average calculator that obtains, in the same manner as the moving average calculator 402A, the moving average number of times Np from the coordinate transformation angular frequency ω received from the variable speed control device 121. In addition, the moving average calculator 402B performs the moving average calculation. The moving average calculator 402B obtains the moving average of the total of the three-phase alternating currents (IUN, IVN, and IWN) Np times to calculate a direct current IDCN.

Reference numeral 403A denotes a d-q converter that performs calculation of Expression 3. Reference numeral 403B denotes a d-q converter that performs calculation of Expression 4. In Expressions 3 and 4, the phase order is U-V-W.

[Expression 3]

$$\begin{bmatrix} IQP \\ IDP \end{bmatrix} = \sqrt{\frac{2}{3}} \begin{bmatrix} \cos\theta & \cos(\theta - 2\pi/3) & \cos(\theta + 2\pi/3) \\ \sin\theta & \sin(\theta - 2\pi/3) & \sin(\theta + 2\pi/3) \end{bmatrix} \begin{bmatrix} IUP \\ IVP \\ IWP \end{bmatrix}$$

$$(3)$$

[Expression 4]

$$\begin{bmatrix} IQN \\ IDN \end{bmatrix} = \sqrt{\frac{2}{3}} \begin{bmatrix} \cos\theta & \cos(\theta - 2\pi/3) & \cos(\theta + 2\pi/3) \\ \sin\theta & \sin(\theta - 2\pi/3) & \sin(\theta + 2\pi/3) \end{bmatrix} \begin{bmatrix} IUN \\ IVN \\ IWN \end{bmatrix}$$

$$(4)$$

Reference numerals 404A and 404B denote alternating current adjusters, each of which performs control calculation such that command values obtained by halving the command values Im* and Iτ* match with measurement calculation values IDP and IQP, command values obtained by halving the command values Im* and Iτ* and reversing the polarities thereof match with the measurement calculation values IDN and IQN.

Reference numeral 405A denotes a direct current adjuster that performs control calculation such that a direct current command IDC* obtained by dividing an output command P* by the output voltage VDC* of a direct current power supply matches with a measurement calculation value IDCP. Reference numeral 405B denotes a direct current adjuster that performs control calculation such that the direct current command IDC* matches with a measurement calculation value IDCN.

Reference numerals 406A and 406B denote inverse d-q conversion calculators, each of which calculates Expression 5.

[Expression 5]

$$\begin{bmatrix} a \\ b \\ c \end{bmatrix} = \sqrt{\frac{2}{3}} \begin{bmatrix} \cos\theta & \sin\theta \\ \cos(\theta - 2\pi/3) & \sin(\theta - 2\pi/3) \\ \cos(\theta + 2\pi/3) & \sin(\theta + 2\pi/3) \end{bmatrix} \begin{bmatrix} d \\ q \end{bmatrix}$$

$$(5)$$

Reference numeral 407A denotes a direct current voltage command correction calculator for the arms 105UP, 105VP, and 105WP, and reference numeral 407B denotes a direct current voltage command correction calculator for the arms 105UN, 105VN, and 105WN. The direct current voltage command correction calculators 407A and 407B output output voltage commands VUP*, VVP*, VWP*, VUN*, VVN*, and VWN* to the respective arms.

According to the above, when phase voltages of the three-phase terminals (R, S, and T) of the squirrel-cage induction machine 107 are denoted as (VR*, VS*, and VT*), the output voltage commands to the arm converter 105UP and the arm converter 105UN are expressed as:

$$VRP* = +VR* + (1/2) \times VDC$$

$$VRN* = -VR* + (1/2) \times VDC$$

Based on these output voltage commands and the capacitor voltage VC of the unit converter 201, PWM calculators 408A and 408B output the gate commands GateP* and GateN*.

Reference numeral 409A denotes a command switch that selectively outputs a current calculation value ID when a binary selection command value SWa is in a state n, or an output of a previous value output unit 410A when the command value is in a state t. Through this operation, the command switch 409A holds the current calculation value ID when the command value SWa is switched from the state n to the state t, and outputs the held value when the command value SWa is in the state t. A command switch 411A selectively outputs the current command Im* when a binary selection command value SWb is in a state a, or the output of the previous value output unit 410A when the command value is in a state s.

Reference numeral 409B denotes a command switch that selectively outputs a current calculation value IQ when the binary selection command value SWa is in the state n, or an output of a previous value output unit 410B when the command value is in the state t. Through this operation, the command switch 409B holds the current calculation value IQ when the command value SWa is switched from the state n to the state t, and outputs the held value when the command value SWa is in the state t. A command switch 411B selectively outputs the torque current command Iτ* when the binary selection command value SWb is in the state a, or the output of the previous value output unit 410B when the command value is in the state s.

Reference numeral 409C denotes a command switch that selectively outputs the effective power value P when the binary selection command value SWa is in the state n, or an output of a previous value output unit 410C when the command value SWa is in the state t. Through this operation, the command switch 409C holds the effective power value P when the command value SWa is switched from the state n to the state t, and outputs the held value when the command value is in the state t. A command switch 411C selectively outputs the effective power command P* when the binary selection command value SWb is in the state a, or the output of the previous value output unit 410C when the command value is in the state s.

A divider 412 outputs the direct current command IDC* based on the direct current voltage command VDC* and the output of the command switch 411C. Reference numeral 413 denotes a command switch that outputs IDC* when a command value SWc is in the state n, or outputs zero when the command value SWc is in the state t.

When a gate block command GB* is set to one, the gate commands GateP* and GateN* are forced to stop by a NOT circuit 414 and gate output blocking circuits 415A and 415B. As a result, all the switching elements 301 and 302 of the direct current power supply devices are prevented from generating arcs.

Reference numeral 416 denotes a converter control switch that selectively produces a binary output of the command value SWa, the command value SWb, or the command value SWc according to a desired operation mode.

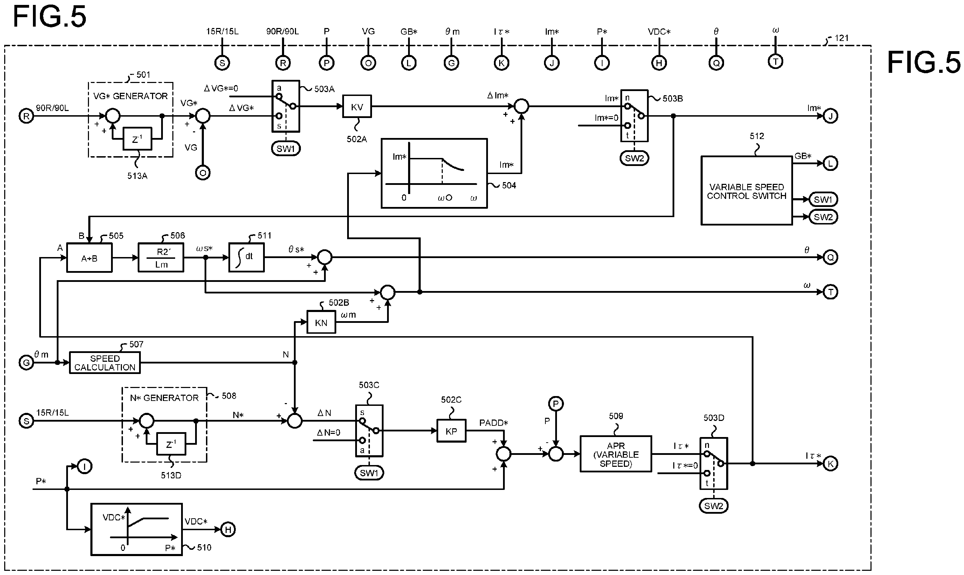

FIG. 5 is a control block diagram illustrating the embodiment of the variable speed control device 121.

Reference numeral 501 denotes a voltage command generator that receives the voltage increase command 90R and the voltage decrease command 90L from the synchronous detector 125, and outputs a result obtained by integrating the received command values into a value output by a previous value output unit 513A as a voltage command VG*.

A generator voltage command correction ΔVG* that is a difference between the voltage command VG* and the generator voltage VG received from the vector calculation device 124 is converted into an excitation current command correction ΔIm* by a constant gain (KV) 502A. An excitation current command generator 504 calculates the excitation current command Im* from the coordinate transformation angular frequency ω, and outputs the result. The excitation current command Im* is added to the excitation current command correction ΔIm*, and the result is output as the excitation current Im* to the converter control device 128.

A command switch 503A selects the voltage command correction ΔVG* when a command value SW1 is in the state s, or selects zero as ΔVG* when the command value SW1 is in the state a, and outputs the result.

Reference numeral 507 denotes a speed calculator that calculates a rotational speed N from an output θm of a rotational phase detector 130.

Reference numeral 508 denotes a speed command generator that receives the frequency increase command 15R and the frequency decrease command 15L from the synchronous detector 125, and outputs a result obtained by integrating the received command values into a value output by a previous value output unit 513D as a speed command N*.

A difference ΔN between the speed command N* and the rotational speed N is converted into an effective power correction command PADD* by a constant gain (KP) 502C. The variable speed control device 121 obtains the difference between a result obtained by adding the effective power correction command PADD* to the effective power command P* and the effective power P received from the vector calculation device 124, and adjusts the obtained difference using an effective power adjuster 509 to obtain the torque current command Iτ*. The variable speed control device 121 outputs the output value of the effective power adjuster 509 or zero as the torque current command Iτ* to the converter control device 128.

Reference numeral 510 denotes a direct current voltage command generator that calculates the direct current voltage command VDC* from the effective power command P, and outputs the result to the converter control device 128.

Reference numeral 503B denotes a command switch that outputs the excitation current command Im* when a command value SW2 is in the state n, or outputs zero when the command value SW2 is in the state t.

Reference numeral 503C denotes a command switch that outputs ΔN mentioned above when the command value SW1 is in the state s, or outputs zero when the command value SW1 is in the state a.

Reference numeral 503D denotes a command switch that outputs the torque current command Iτ* when the command value SW2 is in the state n, or outputs zero when the command value SW2 is in the state t.

Reference numeral 505 denotes a divider that divides the torque current command $I\tau^*$ by the excitation current command Im*. The result of the calculation by the divider 505 is converted into a slip angular frequency command $\omega s^*$ via a constant gain 506, and is further converted into a slip phase $\theta s^*$ by an integrator 511. The variable speed control device 121 outputs the coordinate transformation phase $\theta$ obtained by adding the slip phase $\theta s^*$ to the output $\theta m$ of the rotational phase detector 130 to the converter control device 128. In the present embodiment, the generator direction is assumed to be positive, and it is assumed that $\theta = \theta m + \theta s^*$.

The output N of the speed calculator 507 is converted into a rotational angular frequency $\omega m$ by a constant gain (KN) 502B, and is further added to the slip angular frequency command $\omega s^*$ to obtain the coordinate transformation angular frequency $\omega$, which is output to the converter control device 128. The coordinate transformation angular frequency $\omega$ is supplied to the excitation current command generator 504.

Reference numeral 512 denotes a variable speed control switch that selectively produces a binary output of the command value SW1 or the command value SW2 according to the desired operation mode. The variable speed control switch 512 outputs the gate block command GB* to the converter control device 128.

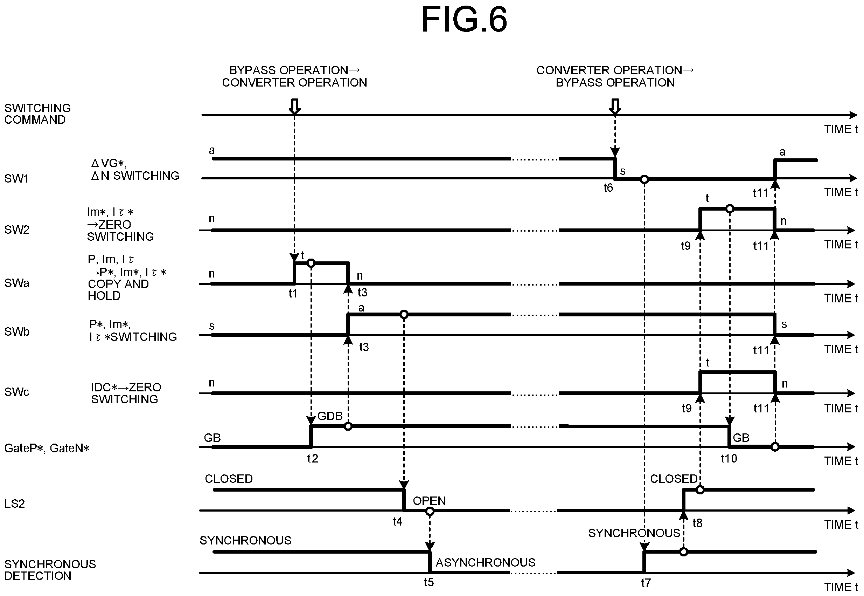

FIG. 6 is a diagram illustrating an embodiment of an operation sequence of the present invention.

The following describes a method of switching from the bypass operation to the converter operation.

First, the states during the bypass operation will be described from the top row of FIG. 6 downward.

SW1 is in the state a. The command switch 503A selectively outputs the voltage correction command $\Delta VG^* = 0$ (command that power factor = 1). The command switch 503C selectively outputs the speed deviation $\Delta N = 0$. The state of the variable speed control device 121 is as described above.

The command value SWa is in the state n. The previous value output unit 410A continues updating the converter current ID. The previous value output unit 410B continues updating the converter current IQ. The previous value output unit 410C continues updating the effective power P. Thus, the operation is prepared for being switched to the converter operation. The command value SWb is in the state s. The command switch 411A continues updating the converter current ID. The command switch 411B continues updating the converter current IQ. The command switch 411C continues updating the effective power P. Thus, the operation is prepared for being switched to the converter operation. The command value SWc is in the state n. The command switch 413 continues updating the direct current command IDC* calculated from the effective power P and the direct current voltage command VDC*. The state of the converter control device 128 is as described above.

The level of the gate block command GB* is one, so that the gate commands GateP* and GateN* to the direct current power supply device 104B are in a gate stop state (hereinafter, called "GB state"). Since the capacitor 303 has been increased in voltage by the chopping operation during the initial charge, the direct current power supply device 104B does not conduct current through the diode of the switching element 302.

The bypass switch load switch (LS2) 114 is in the closed state. The synchronous detector 125 produces no output (90R/90L and 15R/15L). The bypass operation state is as described above.

When the variable speed control device 121 receives a switching command to the converter operation at time t1, the command value SWa simultaneously changes to the state t; the previous value output unit 410A holds the current ID at the time of change in the state of the command value SWa; the previous value output unit 410B holds the current IQ at the time of change in the state of the command value SWa; and the previous value output unit 410C holds the effective power P at the time of change in the state of the command value SWa.

At time t2 after the sampling period $\Delta t$ has elapsed from time t1, the level of the gate block command GB* is changed to zero; the gate commands GateP* and GateN* are placed in a gate output state (hereinafter, called "GDB state"); and the direct current power supply device 104B starts operating.

At time t2, the bypass operation period ends, and the commutation period from the bypass operation to the converter operation starts.

Time t3 is determined by a delay setting value from time t2. The value is set by assuming a margin for a rising response time of the converter control system. A period of several cycles based on the frequency of the alternating current system 101 serves as a target for the setting value. After the command value SWb changes to the state a at time t3, the command switch 411A is switched to the current command Im* from the variable speed control device 121; the command switch 411B is switched to the torque current command $I\tau^*$; and the command switch 411C is switched to the effective power command P*. Thus, the converter control device 128 completes the switching to the converter operation mode. At time t3, SW1 is switched to the state n, and SWa is switched to the state n. Thus, the operation is prepared for being switched to the bypass operation.

Time t4 is set using the commutation period from the bypass switch load switch LS2 to the direct current power supply device 104B as a guide. Since the commutation period can be adjusted to be much shorter than an output change period of the squirrel-cage induction machine 107, the current of the bypass switch load switch LS2 can be quickly reduced to zero. When the bypass switch load switch LS2 is closed at time t4, the commutation period ends, and the converter operation period starts.

At time t5, the voltage supplied to the synchronous detector 125 is placed in the asynchronous state. However, at this time, excluding the synchronous detection function does not cause the outputs (90R/90L and 15R/15L) to affect the variable speed control device 121 and the converter control device 128.

The following describes a method of switching from the converter operation to the bypass operation.

When the variable speed control device 121 receives a switching command to the bypass operation at time t6, the command value SW1 changes to the state s, and the command switch 503A is switched to the voltage correction command $\Delta VG^*$. This operation starts generator voltage adjustment by the voltage increase command 90R and the voltage decrease command 90L from the synchronous detector 125. The command switch 503C is switched to a value changing with time according to the deviation $\Delta N$ between the rotational speed command $N^*$ and the rotational speed N, thus starting the generator voltage adjustment by the frequency increase command 15R and the frequency decrease command 15L from the synchronous detector 125.

At time t7, the synchronous detector 125 detects the synchronization. Time t7 is determined by a time from the start of the synchronization adjustment at time t6 to the detection of the synchronization by the synchronous detector 125, and, although being affected by an engine torque variation during power generation and a load torque variation during motor operation in an exact sense, is determined by a response time of the variable speed control system.

At time t8, the bypass switch load switch LS2 is closed. Time t8 is determined by a time elapsed from when a switch-on command is output after one sampling period $\Delta t$ from time t7 to when the switch is actually closed.

At time t8, the converter operation period ends, and the commutation period from the converter operation to the bypass operation starts.

At time t9, the command value SWc is switched to the state t, and the command switch 413 switches the direct current command IDC* to zero. The command value SW2 is switched to the state t. The command switch 503B switches the current command Im* to zero. The command switch 503D switches the torque current command $I\tau^*$ to zero. The current of the direct current power supply device 104B is reduced to zero.

According to the present embodiment, the current commend is reduced to zero before the GB state is established, so that an effect of achieving the stable operation switching is provided.

At time t10, the level of the gate block command GB* is changed to one; the gate commands GateP* and GateN* are placed in the GB state; and the direct current power supply device 104B stops.

Time t10 is determined by a delay setting value from time t9. The value is set by assuming a margin for the rising response time of the converter control system. The period of several cycles based on the frequency of the alternating current system 101 serves as a target for the setting value.

When the direct current power supply device 104B stops at time t10, the commutation period ends, and the bypass operation period starts.

At time t11, SW1 is switched to the state a; SW2 and SWc are switched to the state n; and SWb is switched to the state s. Thus, the operation is prepared for being switched to the converter operation. According to the above, the state before time t1 is restored.

Time t11 is determined by a delay setting value from time t10. Although the setting value is affected by the engine torque variation during the power generation and the load torque variation during the motor operation in an exact sense, the setting value may be determined by a response time of the effective power adjuster 509. Reference Signs List

101 Alternating current system
102 System breaker
103 Main transformer
104A, 104B Direct current power supply device
105, 105A, 105B, 105UP, 105VP, 105WP, 105UN, 105VN, 105WN Arm converter
106 Load switch
107 Squirrel-cage induction machine
114 Bypass switch load switch
115 Overcurrent protection breaker
116 Initial charge transformer
117, 119, 120 Initial charge breaker 118 Current-limiting resistor
121 Variable speed control device
122 Measurement current transformer
123, 126A, 126B Measurement voltage transformer 124 Vector calculation device
125 Synchronous detector
128 Converter control device
129 Direct current transformer
130 Rotational phase detector

201 Unit converter
202 Current-limiting reactor
301, 302 Switching element
303 Capacitor
304 Optical communication cable
305 Optical-to-electrical conversion element
306 Serial-to-parallel conversion circuit
307 Gate driver
308 Direct current voltage transformer
309 Analog-to-digital converter
310 Parallel-to-serial conversion circuit
311 Electrical-to-optical conversion element
402A, 402B Moving average calculator
403A, 403B d-q converter
404A, 404B Alternating current adjuster
405A, 405B Direct current adjuster
406A, 406B Inverse d-q conversion calculator
407A, 407B Direct current voltage command correction calculator
408A, 408B PWM calculator
409A, 409B, 409C, 411A, 411B, 411C, 413, 503A, 503B, 503C, 503D Command switch
410A, 410B, 410C, 513A, 513D Previous value output unit
412, 505 Divider
414 NOT circuit
415A, 415B Gate output blocking circuit
416 Converter control switch
501 Voltage command generator
502A, 502B, 506 Constant gain
504 Excitation current command generator
507 Speed calculator
508 Speed command generator
509 Effective power adjuster
510 Direct current voltage command generator
511 Integrator
512 Variable speed control switch

**Claims**

1. A variable speed generator/motor device comprising:

a variable frequency power converter including m unit converters (where m is a natural number equal to or larger than one), the unit converters being each provided with two direct current side terminals and three alternating side terminals, being connected in parallel through the two direct current side terminals and the three alternating side terminals, and each comprising six arm converters connected in a three-phase full wave bridge configuration, each of the arm converters being a two-terminal arm converter comprising k unit converters (where k is a natural number equal to or larger than one), one current-limiting reactor, and one direct current transformer connected to one another in series, each of the unit converters being a two-terminal unit converter capable of outputting any voltage through an energy storing element having voltage source characteristics;
a direct current voltage device including a voltage type self-excited converter connected back-to-back to the two direct current side terminals of the variable frequency power converter; and
a converter current adjuster configured to connect three alternating current terminals of the direct current voltage device to an alternating current system, connect three alternating current terminals of the variable frequency power converter to three alternating current terminals of a three-phase squirrel-cage induction machine, and control the unit converters so as to match a current value from the direct current transformer with a converter current command value, wherein
a first three-phase branch circuit is provided between the three alternating current terminals of the direct current voltage device and the alternating current system, a second three-phase branch circuit is provided between three alternating current terminals of the variable frequency power converter and three alternating current terminals of the three-phase squirrel-cage induction machine, a first load switch for a bypass circuit is provided between the first three-phase branch circuit and the second three-phase branch circuit, a measurement current transformer is provided between three-phase alternating current terminals of the three-phase squirrel-cage induction machine and the second three-phase branch circuit, and a power adjuster is provided that is configured to use a current value of the measurement current transformer to output the converter current command value to the variable frequency power converter,

a first mode switching device is provided that is configured to, when switching from a converter mode in which the variable frequency power converter drives the three-phase squirrel-cage induction machine to generate power to a bypass mode in which the first load switch is closed to drive the three-phase squirrel-cage induction machine to generate the power, switch the first load switch from an open state to a closed state, and subsequently stop a gate command to the unit converters, and

a second mode switching device is provided that is configured to, when switching from the bypass mode to the converter mode, hold the current value of the measurement current transformer during the switching, calculate a current command value of the converter current adjuster from the current value and output the result, subsequently start the gate command to the unit converters, and subsequently open the first load switch.

2. The variable speed generator/motor device according to claim 1, wherein an alternating current breaker is provided between the second three-phase branch circuit and the circuit load switch, and the measurement current transformer is configured to detect an overcurrent to close the alternating current breaker.

3. The variable speed generator/motor device according to claim 1, wherein a second load switch is provided between the second three-phase branch circuit and the variable frequency power converter, the first mode switching device is provided with a device configured to block the gate command to the unit converters and subsequently close the second load switch when switching from the converter mode to the bypass mode, and the second mode switching device is provided that is configured to, when switching from the bypass mode to the converter mode, close the second load switch, subsequently hold the current value of the measurement current transformer during the switching, calculate the current command value of the converter current adjuster from the current value and output the result, subsequently start the gate command to the unit converters, and subsequently open the first load switch.

FIG.1

# FIG.2A

# FIG.2B

# FIG.3

FIG.4

FIG.5

# FIG.6

BYPASS OPERATION→
CONVERTER OPERATION

CONVERTER OPERATION→
BYPASS OPERATION

SWITCHING
COMMAND

TIME t

SW1 — $\triangle VG*$, $\triangle N$ SWITCHING

SW2 — Im*, I$\tau$* →ZERO SWITCHING

SWa — P, Im, I$\tau$ →P*, Im*, I$\tau$* COPY AND HOLD

SWb — P*, Im*, I$\tau$*SWITCHING

SWc — IDC*→ZERO SWITCHING

GateP*, GateN*

LS2

SYNCHRONOUS
DETECTION

EP 3 823 158 A1

# FIG.7

...

# FIG.8A

THREE-PHASE ALTERNATING CURRENT WINDINGS

DSMMC

# FIG.8B

THREE-PHASE ALTERNATING CURRENT WINDINGS (60-DEGREE PHASE BAND)

DIMMC

# FIG.8C

THREE-PHASE ALTERNATING CURRENT WINDINGS (120-DEGREE PHASE BAND)

ZCMMC

FIG.9

# FIG.10

EP 3 823 158 A1

# FIG.11

EP 3 823 158 A1

# FIG.12A

MAIN
TRANSFORMER

b
ARM
CONVERTER
a

DCL2

IDC

LS

IT

b
ARM
CONVERTER
a

DCL1

IG

DCL2

b
ARM
CONVERTER
a

DCL1

b
ARM
CONVERTER
a

IC

IG

IM

DIRECT CURRENT
VOLTAGE SOURCE

VARIABLE
FREQUENCY POWER
SUPPLY

(BYPASS OPERATION):(GDB)→(IC=IG0)→(LS CURRENT TO 0)→
(OPEN LS):(CONVERTER OPERATION)

# FIG.12B

MAIN TRANSFORMER

ARM CONVERTER

ARM CONVERTER

DCL2

DCL2

ARM CONVERTER

DCL1

DCL1

ARM CONVERTER

IDC

IT

IG

IG

IC

IG

IM

DIRECT CURRENT VOLTAGE SOURCE

VARIABLE FREQUENCY POWER SUPPLY

(CONVERTER OPERATION):(CLOSE LS)→(IC✳=0)&(IDC✳=0)→(IC TO 0)→(GB):(BYPASS OPERATION)

## INTERNATIONAL SEARCH REPORT

| International application No. |
|---|
| PCT/JP2019/026187 |

**A. CLASSIFICATION OF SUBJECT MATTER**

Int.Cl. H02P9/04(2006.01)i, H02M7/12(2006.01)i, H02M7/493(2007.01)i, H02M7/497(2007.01)i, H02P9/00(2006.01)i

According to International Patent Classification (IPC) or to both national classification and IPC

**B. FIELDS SEARCHED**

Minimum documentation searched (classification system followed by classification symbols)
Int.Cl. H02P9/04, H02M7/12, H02M7/493, H02M7/497, H02P9/00

Documentation searched other than minimum documentation to the extent that such documents are included in the fields searched
Published examined utility model applications of Japan          1922–1996
Published unexamined utility model applications of Japan        1971–2019
Registered utility model specifications of Japan               1996–2019
Published registered utility model applications of Japan        1994–2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 6243083 B2 (HITACHI MITSUBISHI HYDRO CORPORATION) 06 December 2017, paragraphs [0088]–[0095], [0107]–[0110], fig. 9, 11, 13 & US 2018/0034399 A1, paragraphs [0113]–[0120], [0132]–[0135], fig. 9, 11, 13 & WO 2016/136682 A1 & EP 3264583 A1 & CN 107408899 A | 1–3 |
| Y | JP 2012-228025 A (HITACHI, LTD.) 15 November 2012, paragraphs [0076]–[0080], fig. 12 (Family: none) | 1–3 |

☒ Further documents are listed in the continuation of Box C.          ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 11 September 2019 (11.09.2019) | 24 September 2019 (24.09.2019) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2019/026187

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2008-43184 A (EBARA CORPORATION) 21 February 2008, paragraphs [0019]-[0023], fig. 1-2 & US 2007/0273342 A1, paragraphs [0047]-[0051], fig. 1-2 & EP 1860750 A2 & CN 101098079 A | 1-3 |
| Y | P 2016-185006 A (MEIDENSHA CORPORATION) 20 October 2016, paragraphs [0015]-[0020], fig. 1-2 (Family: none) | 1-3 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5189105 B
- JP 2009135523 A
- JP 5268739 B
- JP 6243083 B
- JP 2003088190 A
- JP 6246753 B
- JP 5537095 B
- JP 5045053 B
- JP S5788881 B
- JP S62247776 B

### Non-patent literature cited in the description

- **MAKOTO HAGIWARA ; KAZUTOSHI NISHIMURA ; YASUFUMI AKAGI.** High Voltage Motor Drive Using Modular Multilevel PWM Inverter: First Report - Experimental Verification Using 400 V, 15 kW Mini Model. *The transactions of the Institute of Electrical Engineers of Japan D,* April 2010, vol. 130 (4), 544-551
- **ISAMU HASEGAWA ; SHIZUNORI HAMADA ; KENJI KOBORI ; YUTAKA SHOJI.** Development of Transformerless Multilevel High Voltage Inverter. 2016, 34-39
- High Voltage Inverters Contributing to Power Leveling at Pumped Storage Power Plants. *Yaskawa News,* 9
- Power Electronics Education Working Group, Engineer Education Committee, The Institute of Electrical Engineers of Japan, ''Motor Drive Basics - Part 2. *3rd Power Electronics Seminar,* March 2014, 46-47